# EUROPÄISCHE PATENTSCHRIFT

(11) **EP 1 836 904 B1**
(45) Veröffentlichungstag und Bekanntmachung des Hinweises auf die Patenterteilung: **11.05.2011**
(21) Anmeldenummer: 07002982.2
(22) Anmeldetag: 13.02.2007
(51) Int. Cl.: A23L 1/06

(54) **Lebensmittelprodukt, umfassend frische Früchte**
Foodstuff product comprising fresh fruits
Produit alimentaire comprenant des fruits frais

(30) Priorität: 23.03.2006 DE 102006013814
(43) Veröffentlichungstag der Anmeldung: 26.09.2007
(73) Patentinhaber: ZENTIS GmbH & Co. KG, 52070 Aachen (DE)
(72) Erfinder: Stauber, Dieter, Dr., 52134 Herzogenrath (DE); Otte, Dietmar, Dipl.-Ing., 52076 Aachen (DE); Johnen, Karl-Heinz, 52066 Aachen (DE); Müller, Marc, Dipl.-Ing., 52531 Übach-Palenberg (DE)
(74) Vertreter: Bauer, Dirk

(56) Entgegenhaltungen:
- WO-A-01/97631
- WO-A-2004/113390
- DE-A1- 2 129 853
- DE-A1- 2 311 403
- JP-A- 10 295 280
- US-A- 4 746 528

## Beschreibung

Die Erfindung betrifft ein Lebensmittelprodukt, welches frische, ganze Früchte und/oder frische Fruchtstücke umfasst. Die Erfindung umfasst ferner die Verwendung einer wässrigen, fließfähigen Zubereitung als Bindemittel zum Binden frischer, ganzer Früchte und/oder frischer Fruchtstücke sowie entsprechende. Verfahren zur Herstellung eines erfindungsgemäßen Lebensmittelproduktes. Schließlich betrifft die Erfindung auch ein verzehrfertiges Lebensmittelprodukt, welches durch Lagern eines erfindungsgemäßen Lebensmittelproduktes erhalten werden kann.

Frische, ganze Früchte und/oder frische Fruchtstücke im Sinne des vorliegenden Textes sind Früchte bzw. Fruchtstücke, welche nicht durch thermische Verfahren (Pasteurisation, Kochen, Sterilisieren) und/oder Hochdruck-Verfahren haltbar gemacht sind oder als getrocknete, kandierte oder geschwefelte Früchte vorliegen. Unter den Begriff frische, ganze Früchte und Fruchtstücke fallen hingegen sowohl frisch geerntete Früchte als auch Tiefkühlfrüchte (TK-Früchte) und andersartig gelagerte Früchte, welche keiner der vorstehend genannten Behandlungen unterzogen wurden.

DE 2 129 853 offenbart ein Verfahren zur Herstellung von Frucht-Joghurt mit zudosiertem Granulat als Stabilisator. Der verwendete Stabilisator ist ein pflanzliches Hydrokolloid aus der Gruppe der Galaktomannane.

Nachfolgend wird anstelle des Begriffes "frische, ganze Früchte und/oder frische Fruchtstücke" in manchen Fällen auch vereinfachend der Begriff "frische Früchte" verwendet.

In privaten Haushalten ist der Verzehr von frischen Früchten, entweder als einzelne Frucht oder beispielsweise in Form von selbstgemachtem Obstsalat, weit verbreitet. Bei der Zubereitung von Obstsalat ergibt sich allerdings der Nachteil, dass dieser nicht lange haltbar ist und hinsichtlich seines optischen Eindrucks schnell unansehnlich wirkt. Viele Früchte verfärben sich an der Luft braun und wirken nicht mehr appetitlich. Weiterhin geben Früchte mit der Zeit einen Teil ihres Saftes ab, vor allem unter Zugabe von Zucker, wodurch sie ihre ursprüngliche Konsistenz und Saftigkeit verlieren. Wird die Speise nicht bald nach der Zubereitung verzehrt, kommt der Aspekt des mikrobiellen Verderbs hinzu: Durch Keimvermehrung wird die Speise nach Überschreiten einer gewissen (von der Temperatur abhängigen) Lagerzeit ungenießbar oder sogar gesundheitsgefährdend.

Bei der industriellen Herstellung von Obstsalaten oder abgepackten Früchten bzw. Fruchtstücken sowie beispielsweise bei der Herstellung von "rote Grütze" wird das Problem des mikrobiellen Verderbs durch beispielsweise Kochen oder Pasteurisieren der Früchte bzw. Fruchtstücke und anschließende Lagerung der behandelten Früchte bzw. Fruchtstücke in Konserven weitestgehend vermieden.

In privaten Haushalten ist es zudem weit verbreitet, frische Früchte mit Milchprodukten zu kombinieren. Ein "Milchprodukt" ist dabei ein Lebensmittel, dessen Zutaten hauptsächlich aus Milch bestehen. Zu den Milchprodukten gehören einerseits verschieden behandelte Milchtypen und andererseits Produkte der Milch, die durch Fermentation von Milchbestandteilen gewonnen werden. Zu den Milchprodukten gehören insbesondere Quark, Joghurt, Frischkäse und Süßdesserts auf Milchbasis. Das Milchprodukt sollte hierbei frisch oder z.B. durch eine Wärmebehandlung haltbar gemacht worden sein. Das Milchprodukt kann gesüßt oder ungesüßt vorliegen. Insbesondere bei der Verwendung in privaten Haushalten kommt es bei Kombination von frischen Früchten mit Milchprodukten häufig zu dem Effekt, dass das Milchprodukt (zum Beispiel Quark oder Joghurt) nach einigen Stunden insbesondere in der Umgebung der Früchte wässrig wirkt, bedingt durch die Abgabe von Saft aus den Früchten an das Milchprodukt und das mangelnde Wasserbindungsvermögen des Milchprodukts.

Auch in der Lebensmittelindustrie ist die Kombination von Milchprodukten und Früchten weit verbreitet. So finden sich beispielsweise im Lebensmitteleinzelhandel Produkte, in denen eine gekochte (und auf diese Weise konservierte) Fruchtzubereitung, die überdies eingedickte Saftbestandteile enthalten kann, mit einer weiteren Schicht aus einem Milchprodukt kombiniert ist. Zudem werden beispielsweise in Großbritannien Produkte vertrieben, die aus Früchten, einem darüber angeordneten Keks und wiederum darüber liegendem Pudding bestehen, sogenannte "Trifles". Der Keks hat hierbei unter anderem die Aufgabe, den Pudding und die Früchte von einander zu trennen; er verhindert somit die Verflüssigung des Puddings durch aus den Früchten austretenden Fruchtsaft. Zudem nimmt der Keks unter Erweichung einen Teil des von den Früchten abgegebenen Saftes auf, wodurch das Produkt sein appetitliches Aussehen behält.

In industriellem Maßstab hergestellte Produkte, die neben frischen Früchten auch ein Milchprodukt umfassen, finden sich nur sehr selten. Es ist aber beispielsweise ein Molkereiprodukt der schweizerischen Molkerei "Aargauer" bekannt, das aus einer Kombination eines Joghurts mit frischen Früchten besteht. Im unteren Bereich der vertriebenen Joghurtbecher sind Früchte angeordnet, die mit Zucker bestreut sind; ein über diese Frucht/Zucker-Anordnung gegebener Joghurt füllt die Zwischenräume zwischen den Früchten aus. Das bekannte Produkt weist jedoch die folgenden Nachteile auf:
(a) Es gibt keine Trennschicht zwischen den Früchten und dem Milchprodukt (Joghurt), welche die Verflüssigung des Milchproduktes durch aus den Früchten austretenden Fruchtsaft verhindern könnte,
(b) Die von Joghurt umgebenen Früchte können innerhalb des Joghurts in Richtung Produktoberfläche flotieren, da sie einen vergleichsweise hohen Luftanteil (bis zu 20 Vol-%) umfassen und somit ihre Dichte geringer ist als die des Milchproduktes, dessen Viskosität schon anfänglich nicht sonderlich hoch ist und durch den Eintritt von Fruchtsaft noch reduziert wird.
(c) Der Joghurt wird durch Saftabgabe aus den Früchten in deren Umgebung verfärbt und verwässert, was insbesondere im Falle roter Früchte (Himbeeren, Brombeeren, Kirschen), die wasserlösliche Farbstoffe enthalten, als besonders nachteilig empfunden wird.
(d) Am Boden der Joghurtbecher entsteht bereits nach kurzer Lagerzeit eine unansehnliche Flüssigkeitsansammlung, die insbesondere Fruchtsaft umfasst. Das gesamte Erscheinungsbild des Fruchtjoghurts wirkt bereits nach kurzer Zeit auf den Verbraucher unattraktiv. Die eingesetzten frischen Früchte sind bereits nach kurzer Lagerzeit am Becherboden kaum noch zu erkennen.

### Aufgabe

Es war somit die primäre Aufgabe der vorliegenden Erfindung ein Lebensmittelprodukt anzugeben, welches frische Früchte umfasst und das dennoch im Unterschied zum vorstehend geschilderten Stand der Technik über einen längeren . Zeitraum sein Erscheinungsbild und seine Konsistenz zumindest im Wesentlichen bewahrt, insbesondere bei Lagertemperaturen im Bereich von 3 bis 10°C, vorzugsweise 6 bis 8°C.

Das anzugebende Lebensmittelprodukt, welches frische Früchte umfasst, sollte dabei insbesondere zur Kombination mit Milchprodukten (insbesondere. Joghurt oder Quark) geeignet sein (bzw. diese umfassen) und auch in Kombination mit diesen Milchprodukten für einen längeren Zeitraum hochattraktiv und appetitlich bleiben.

### Lösung

Die gestellte Aufgabe wird erfindungsgemäß gelöst durch ein Lebensmittelprodukt, umfassend die Komponenten
(a) frische, ganze Früchte und/oder frische Fruchtstücke sowie
(b) eine wässrige, fließfähige Zubereitung, welche Zwischenräume zwischen den frischen, ganzen Früchten und/oder den frischen Fruchtstücken ganz oder teilweise ausfüllt, umfassend:
   (i) in einer Gesamtmenge von mehr als 25 Gew.%, vorzugsweise mehr als 40 Gew.%, besonders vorzugsweise mehr als 45 Gew-% bezogen auf die Gesamtmenge der wässrigen Zubereitung, gelöste Feststoffe ausgewählt aus der Gruppe bestehend aus: Zuckerarten, Zuckeralkohole, Süßstoffe, Fructooligosaccharide, Polydextrose, sonstige wasserlösliche Ballaststoffe und deren Mischungen,
   (ii) ein oder mehrere Galactomannane zum Verdicken der Zubereitung unter Lagerbedingungen durch Binden von Wasser aus den Früchten und/oder Fruchtstücken.

Hinsichtlich der Definition des Begriffes "frische, ganze Früchte und/oder frische Fruchtstücke" wird auf die obigen Ausführungen verwiesen.

Der Begriff "Zuckerarten" umfasst insbesondere die in der deutschen Zuckerartenverordnung vom 23. Oktober 2003 sowie in der zugehörigen Anlage 1 genannten Erzeugnisse. Insbesondere fallen unter den Begriff "Zuckerarten" somit Saccharose (insbesondere in Form von Halbweisszucker, Weisszucker, raffiniertem Zucker, raffiniertem Weisszucker oder Raffinade). Des Weiteren fallen unter den Begriff "Zuckerarten" Produkte, die als Flüssigzucker, Invertflüssigzucker, Invertzucker-Sirup, Glukosesirup, getrockneter Glukosesirup, Dextrose, (kristallwasserhaltig und kristallwasserfrei) oder Fructose bezeichnet werden. Der Einsatz von Saccharose ist erfindungsgemäß bevorzugt.

Der Begriff "Zuckeralkohole" bezeichnet Polyhydroxy-Verbindungen, die aus Monosacchariden durch Reduktion der Carbonyl-Gruppe entstehen. Insbesondere umfasst der Begriff "Zuckeralkohole" die Substanzen Sorbit (Sorbitsirup), Mannit, Isomalt, Maltit, Maltitsirup, Lactit und Xylit, vergleiche hierzu Anlage 2 der deutschen Zusatzstoffzulassungsverordnung 1998.

Der Begriff "Süßstoffe" bezeichnet Verbindungen synthetischer oder natürlicher Herkunft, die keinen oder im Verhältnis zur Süßkraft einen vernachlässigbaren physiologischen Brennwert besitzen und eine um ein Vielfaches höhere Süßkraft als Saccharose aufweisen. Der Begriff "Süßstoff" umfasst insbesondere die in der EU zugelassenen Süßstoffe wie Saccharin, Cyclamat, Aspartam, Acesulfam, Taumatin, Sucralose und NHDC.

Der Begriff "Fructooligosaccharide" bezeichnet beta-D-Fructane mit 2 bis 10 Fructoseeinheiten, bei denen die Fructose-Einheiten beta-2,1-glycosidisch verknüpft sind und am terminalen Kettenende eine einzelne D-Glucose-Einheit vorliegt. Fructooligosaccharide zählen zu den prebiotischen Ballaststoffen.

Der Begriff "Polydextrose" bezeichnet ein Polymer, dass durch Polykondensation von Glucose mit Sorbit und Zitronensäure hergestellt wird. Polydextrose schmeckt zwar nicht süß, verbessert aber die Textur und den Geschmackseindruck von Lebensmitteln (bulking agent). Es kann in Kombination mit Süßstoffen , als Ersatz für Saccharose eingesetzt werden.

Der Begriff "sonstige Ballaststoffe" bezeichnet für den Menschen unverdauliche wasserlösliche Nahrungsbestandteile, die in der obigen Gruppe nicht explizit als Bestandteil der Komponente (i) genannt sind (also keine Zucker, Zuckeralkohole, Fructooligosaccharide oder Polydextrosen sind) und nicht als Bestandteil der Komponenten (ii) bzw. (iii) (siehe hierzu unten) aufgefasst werden können.

Der Begriff "Galactomannane" bezeichnet eine Gruppe von meist wasserlöslichen Polysachariden, die als Reservestoffe im Endosperm von Samen von z.B. Leguminosen oder Cassia grandis vorkommen. Der Begriff "Galactomannane" umfasst insbesondere Guarkernmehl und Johannisbrotkernmehl sowie Taragummi.

Der Begriff "Guarkemmehl" (Guaran, Guargummi, INCI-Bezeichnung: Guar Gum, E412) bezeichnet hierbei ein Hydrokolloid (Verdickungsmittel), welches in Wasser aufquillt. Johannisbrotkernmehl ist ebenso wie Guarkemmehl ein bekanntes Verdickungsmittel.

Die im erfindungsgemäßen Lebensmittelprodukt als Komponente (b) einzusetzende wässrige Zubereitung kann neben den genannten Komponenten (i) und (ii) weitere Komponenten umfassen. Zu besonders bevorzugten weiteren Komponenten vergleiche die Ausführungen weiter unten. Es sei jedoch bereits jetzt angemerkt, dass der Wasseranteil der wässrigen Zubereitung, welche als Komponente (b) eingesetzt wird, in Form von Fruchtsaft, Fruchtextrakt, Fruchtsaftkonzentrat, Fruchtmus, Fruchtpüree oder anderen wässrigen Fruchtprodukten zur Verfügung gestellt sein kann.

Die gelösten Feststoffe in der Komponente (ii) der wässrigen Zubereitung (b) sind vorzugsweise ausgewählt aus der Gruppe bestehend aus: Zuckerarten, Zuckeralkohole und deren Mischungen.

Die Erfindung beruht insbesondere auf der überraschenden Erkenntnis, dass eine wässrige Zubereitung mit den oben angegebenen Komponenten (i) und (ii) in einem erfindungsgemäßen Lebensmittelprodukt den aus den frischen Früchten austretenden Fruchtsaft an sich binden kann, ohne und dabei selbst einen Konsistenz- bzw. Viskositätsverlust zu erleiden. Eine besondere Bedeutung kommt hierbei dem bzw. den eingesetzten Galactomannanen (Komponente (ii)) zu, welche in einer Menge vorliegen müssen, die zu einem Verdicken der Zubereitung unter Lagerbedingungen durch Binden von Wasser aus den Früchten und/oder Fruchtstücken führt. Im frisch hergestellten erfindungsgemäßen Lebensmittelprodukt ist die wässrige Zubereitung somit weniger verdickt als nach einer gewissen Lagerzeit, nach der bereits Wasser aus den Früchten und/oder Fruchtstücken in die wässrige Zubereitung übergetreten ist. Vorteilhafter Weise wird in Komponente (ii) der wässrigen Zubereitung (b) Guarkernmehl eingesetzt; daneben können ein oder weitere Galactomannane eingesetzt werden, z.B. Johannisbrotkernmehl.

Ein erfindungsgemäßes Lebensmittelprodukt umfasst vorzugsweise als Komponente (ii) der wässrigen Zubereitung (b) ein oder mehrere Galactomannane in einer Menge im Bereich von 0,2 bis 0,8 Gew.-%, bezogen auf die Gesamtmenge der wässrigen Zubereitung (b), vorzugsweise Guarkernmehl in einer Menge im Bereich von 0,2 bis 0,8 Gew.-%.

Weil die in der wässrigen Zubereitung vorhandene Galaktomannane durch Binden von Wasser aus den Früchten und/oder Fruchtstücken ein Verdicken der Zubereitung unter Lagerbedingungen bewirken, wird einer Flüssigkeitsbildung am Boden eines Lagergefäßes (z.B. eines handelsüblichen Kunststoffbechers) und demzufolge einem Konsistenzverlust der Früchte entgegengewirkt. Besonders bei Einsatz von Tiefkühl-Früchten (TK-Früchten), die auf Grund ihres gefrorenen Zustands zwar unempfindlich gegen mechanische Beanspruchung (wie beispielsweise Quetschungen) sind, aber bei einem Auftauen wegen der zerstörten Zellstruktur eine enorme Flüssigkeitsquelle bilden, erweist sich die beschriebene Eigenschaft der wässrigen Zubereitung, die aus der Anwesenheit der Galactomannane (insbesondere Guarkernmehl) resultiert, als äußerst vorteilhaft. Saftansammlungen im Bereich um die Früchte und/oder Fruchtstücke werden vollständig oder zumindest im wesentlichen vermieden. Die eingesetzten frischen Früchte behalten ihre ursprüngliche Form und wirken auf den Verbraucher frisch und appetitlich. Die Verwendung von ganzen Früchten in einem erfindungsgemäßen Lebensmittelprodukt ist bevorzugt, denn sie vermittelt dem Endverbraucher den Eindruck von einem Produkt mit hoher Qualität und großem gesundheitlichen Wert. Werden für das Lebensmittel jedoch vergleichsweise große Früchte ausgewählt, wie beispielsweise Pfirsiche, Aprikosen oder Äpfel, so ist eine Zerkleinerung der Früchte in Fruchtstücke auf Grund der Größenverhältnisse regelmäßig erforderlich, weil handelsübliche Lagerbehältnisse wie z.B. Joghurtbecher oder dergleichen die Aufnahme großer Früchte nicht gestatten. Die Größe der einzusetzenden frischen Fruchtstücke wird jedoch vorzugsweise möglichst groß gewählt, so dass für den Konsumenten eine Assoziation mit den ursprünglichen Früchten besteht. Vorzugsweise werden frische Fruchtstücke eingesetzt, die ein Volumen von zumindest 0,5 cm³ und vorzugsweise ein Volumen von ca. 1 cm³ besitzen.

Es wurde bereits erwähnt, dass die als Komponente (b) eines erfindungsgemäßen Lebensmittelprodukts eingesetzte wässrige Zubereitung vorzugsweise in ihrer Komponente (ii) Guarkernmehl umfasst. Guarkernmehl zeichnet sich dadurch aus, dass es in der Lage ist, bei ausreichend hoher Wasseraktivität ein Vielfaches einer Menge an Wasser aufzunehmen (1 g Guarkernmehl kann bis zu etwas 20 g Wasser binden), so dass die erfindungsgemäß einzusetzende wässrige Zubereitung dickflüssiger wird, aber homogen in der Konsistenz bleibt, wenn die eingesetzten frischen Früchte während der Lagerung Saft abgeben. Diese Eigenschaft des Guarkernmehls ist besonders positiv für den Verzehr des erfindungsgemäßen Lebensmittelprodukts, da sie den Erhalt einer homogenen Konsistenz der wässrigen Zubereitung gewährleistet und lokale Flüssigkeitsansammlungen verhindert.

In der erfindungsgemäß einzusetzenden wässrigen Zubereitung (b) liegt neben dem einen oder den mehreren Galactomannanen (z.B. Guarkernmehl) eine Menge von mehr als 25 Gew.-% gelöster Feststoffe vor. Diese sind - wie bereit erwähnt wurde - vorzugsweise ausgewählt aus der Gruppe bestehend aus Zuckerarten, Zuckeralkohole und deren Mischungen. In der erfindungsgemäß einzusetzenden wässrigen Zubereitung (b) stehen somit die gelösten Feststoffe (insbesondere Zucker, Zuckeralkohol und deren Mischungen) und das bzw. die Galactomannane (z.B. Guarkernmehl) bezüglich der Wasserbindung in Konkurrenz. Die wässrige Zubereitung ist so eingestellt, dass im Ausgangszustand, d.h. vor Austritt von Flüssigkeit aus den frischen Früchten in die wässrige Zubereitung, das Galactomannan (z.B. Guarkernmehl) auf Grund der vergleichsweise niedrigen Wasseraktivität noch keine oder eine nur reduzierte Wasserbindungsfähigkeit besitzt. Erst nach Zutritt von Wasser aus den frischen Früchten in die wässrige Zubereitung steigt der Wassergehalt in der wässrigen Zubereitung (und damit die Wasseraktivität) soweit, dass das Galactomannan (z.B. Guarkernmehl) eine hohe Wasserbindungsfähigkeit erlangt. Gleichzeitig tritt gegebenenfalls Zucker aus Komponente (i) der wässrigen Zubereitung (b) in die frischen Früchte ein, welche die Komponente (a) des erfindungsgemäßen Lebensmittelproduktes bilden. Anfänglich besitzt also beispielsweise eingesetztes Guarkernmehl auf Grund des beispielsweise vorhandenen hohen Anteils an Zucker in der wässrigen Zubereitung (b) ein nur geringes Wasserbindungsvermögen und liegt folglich im noch nicht oder nur geringfügig gequollenen Zustand vor. Durch Zutritt von Wasser aus den frischen Früchten in die wässrige Zubereitung und Austritt von Zucker aus der wässrigen Zubereitung in die frischen Früchte erhöht sich dann jedoch die Wasseraktivität und damit das Wasserbindungsvermögen des Guarkemmehls, und dieses bindet das aus den frischen Früchten freiwerdende Wasser an sich, wodurch gleichzeitig die wässrige Zubereitung insgesamt verdickt wird.

Ein bevorzugtes erfindungsgemäßes Lebensmittelprodukt umfasst in der wässrigen Zubereitung (b) neben den Komponenten (i) und (ii) des Weiteren als Komponente (iii) ein niederverestertes, vorzugsweise amidiertes Pektin. Der Begriff "niederverestertes Pektin" bezeichnet hierbei Pektine, deren Säuregruppen zu maximal 50% mit Methanol verestert sind. Amidierte niedrigveresterte Pektine benötigen zur Gelbildung Calcium-lonen und die resultierenden Calcium-Pektinat-Gele sind hitzereversibel. Amidierte Pektine neigen nicht zur Koagulation bei Calcium-Überschuss. Besonders vorteilhaft ist der Einsatz von niedrigverestertem, vorzugsweise amidertem Pektin in einer Menge von 0,5 bis 1,0 Gew.-%, vorzugsweise 0,5 bis 0,75 Gew.-%, bezogen auf die Gesamtmenge der wässrigen Zubereitung (b). Hierbei wird das amidierte Pektin in der angegebenen Menge vorzugsweise neben Guarkernmehl eingesetzt, das dabei vorzugsweise in dem oben angegebenen Mengenbereich von 0,2 bis 0,8 Gew.% vorliegt. Die Eigenschaften von Guarkernmehl und Pektin ergänzen sich in einer entsprechenden bevorzugten wässrigen Zubereitung, die als Komponente (b) eines erfindungsgemäßen Lebensmittelproduktes eingesetzt werden kann, in hervorragender Weise, so dass ein entsprechendes Lebensmittelprodukt auch nach langer Lagerzeit für den Konsumenten äußerst attraktiv ist.

Vorzugsweise umfasst ein erfindungsgemäßes Lebensmittelprodukt in der wässrigen Zubereitung (b) neben den Komponenten (i) und (ii) sowie gegebenenfalls (iii) als zusätzliche Komponente (iv) einen oder mehrere Säureregulatoren, wobei die wässrige Zubereitung einen pH-Wert im Bereich von 4 bis 5 besitzt.

"Säureregulatoren" sind dabei Stoffe, die den pH-Wert des erfindungsgemäßen Lebensmittelproduktes verändern oder steuern. Als Säureregulatoren werden in erfindungsgemäßen Lebensmittelprodukten vorzugsweise Genusssäuren beziehungsweise deren Salze eingesetzt, insbesondere Zitronensäure sowie die entsprechenden Citrate. Eingesetzt werden können aber auch Lactate, Tartrate, Phosphate, Malate, Adipate, Gluconate und ihre entsprechenden Genusssäuren.

In einem erfindungsgemäßen Lebensmittelprodukt liegen die frischen, ganzen Früchte und/oder die frischen Fruchtstücke vorzugsweise zunächst im gefrorenen Zustand vor. Der Einsatz von gefrorenen, frischen Früchten (insbesondere Tiefkühl-Früchten, d.h. TK-Früchten) ist insbesondere für die industrielle Herstellung erfindungsgemäßer Lebensmittelprodukte vorteilhaft.

In einem erfindungsgemäßen Lebensmittelprodukt umfasst die wässrige Zubereitung (b) vorzugsweise neben den Komponenten (i), (ii) sowie gegebenenfalls (iii) und/oder (iv) als Komponente (v) ein Konservierungsmittel. Dieses Konservierungsmittel ist dabei vorzugsweise ausgewählt aus der Gruppe bestehend aus Benzoesäure, Sorbinsäure, deren Salzen und Mischungen davon.

Ein erfindungsgemäßes Lebensmittelprodukt kann als weiteres Verdickungsmittel Xanthan umfassen.

Die erfindungsgemäß einzusetzende wässrige Zubereitung kann beispielsweise durch Pasteurisierung haltbar gemacht worden sein.

Üblicherweise umfasst ein erfindungsgemäßes Lebensmittelprodukt neben den Hauptkomponenten (a) und (b) als weitere Hauptkomponente (c) ein Milchprodukt und/oder ein Sojaprodukt, wobei das Lebensmittelprodukt mehrschichtig ist und die Komponenten (a) und (b) gemeinsam eine erste Schicht und die Komponente (c) eine zweite Schicht bilden, wobei erste und zweite Schicht vorzugsweise aneinander grenzen und gegebenenfalls ineinander greifen.

Hinsichtlich der Definition des Begriffes "Milchprodukt" wird auf die obigen Ausführungen verwiesen. Der Begriff "Sojaprodukt" bezeichnet Produkte, die durch Bearbeitung aus Sojabohnen hergestellt werden. Insbesondere umfasst der Begriff im Rahmen des vorliegenden Textes Produkte, welche als Alternative zu handelsüblichen Milchprodukten eingesetzt werden, wie z.B. Sojajoghurt oder Sojaquark.

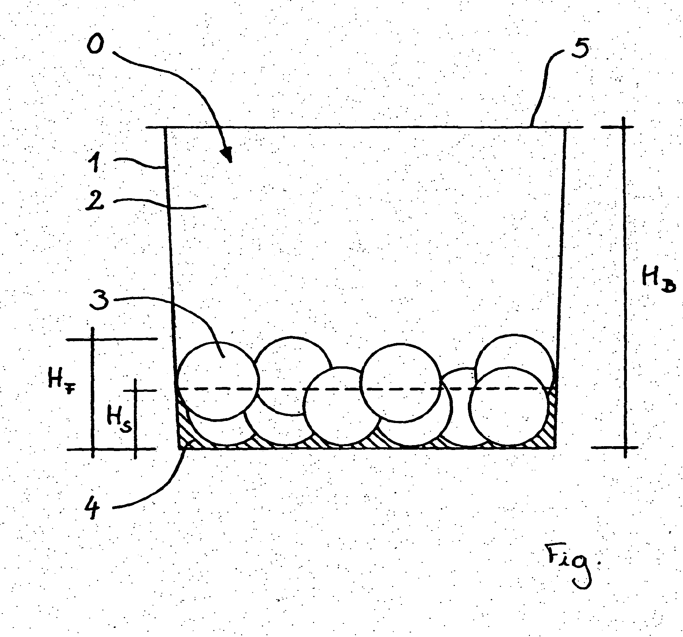

Die erste und die zweite Schicht eines bevorzugten Lebensmittelproduktes greifen insbesondere dann ineinander, wenn die erste Schicht unter der zweiten Schicht angeordnet ist und die Füllhöhe H_{F} der Komponente (a) in der ersten Schicht höher ist als die Füllhöhe Hₛ der Komponente (b) in der ersten Schicht. Vergleiche hierzu auch das Ausführungsbeispiel weiter unter sowie die zugehörige Figur 1. Bei einer entsprechenden Ausgestaltung des erfindungsgemäßen, eine erste und zweite Schicht umfassenden Lebensmittelproduktes kann sich die Füllhöhe Hₛ der Komponente (b) bei Lagerung durch Binden von Wasser aus den Früchten und/oder Fruchtstücken gemäß Komponente (a) erhöhen und die Füllhöhe H_{F} der Komponente (a) wegen Wasserabgabe an die Komponente (b) verringern. Die Füllhöhen Hₛ und H_{F} nähern sich somit bei Lagerung einander an.

Bei der vorstehend beschriebenen Ausführungsform eines erfindungsgemäßen Lebensmittelprodukts, welche eine erste Schicht und eine zweite Schicht umfasst, wirken sich die weiter oben beschriebenen Vorteile des erfindungsgemä-ßen Lebensmittelproduktes besonders vorteilhaft aus. Insbesondere verhindert die Anwesenheit der Komponente (b), d.h. die Anwesenheit der wässrigen Zubereitung, das Aufschwimmen der Früchte in Richtung Oberfläche des Lebensmittelproduktes in die zweite Schicht (Komponente (c)) hinein und durch sie hindurch. Komponente (b) wirkt somit als Bindemittel für die Komponente (a), wobei die Bindungskraft der Komponente (b) bei zunehmender Lagerdauer zumindest zeitweilig zunimmt, da die Verdickungswirkung der als Komponente (ii) eingesetzten Galactomannane (vorzugsweise Guarkernmehl) mit zunehmendem Eintritt von Fruchtwasser aus der Komponente (a) und zunehmendem Austritt von beispielsweise Zucker aus der Komponente (b) in die Komponente (a) zumindest zeitweilig zunimmt. Bei Lagerung des erfindungsgemäßen Lebensmittelproduktes in einem handelsüblichen Becher bleiben die frischen Früchte somit stabil am Becherboden positioniert. Durch die Flüssigkeitsabgabe aus den Früchten (Komponente (a)) gewinnt die wässrige Zubereitung an Viskosität und wird steifer bzw. zähflüssiger, was ein Flotieren der Früchte durch das Milchprodukt oder Sojaprodukt auf Grund der erhöhten viskosen Reibungskräfte verhindert. Die wässrige Zubereitung klebt die frischen Früchte insbesondere bei Herstellung eines erfindungsgemäßen Lebensmittelproduktes durch Aufdosieren der Komponente (c) zusammen und immobilisiert diese. Die Immobilisierung der Früchte führt zusätzlich dazu, dass die Komponente (c), d.h. das Milchprodukt und/oder Sojaprodukt durch die Früchte gar nicht oder zumindest langsamer verfärbt wird. Überdies stellt sich bei einer Lagertemperatur im Bereich von 3 bis 10°C, vorzugsweise 6 bis 8°C, schon nach kurzer Zeit in der ersten Schicht eine hoch attraktive, cremig-zart gelierte Konsistenz ein, welche vom Konsumenten besonders bevorzugt wird.

Die erfindungsgemäß vorgesehene wässrige Zubereitung (b) sorgt somit dafür, dass die frischen Früchte (Komponente (a)) regelmäßig nicht vollständig in die Komponente (c) eindringen können. Die Konsistenz der wässrigen Zubereitung (Komponente (b)) ist dabei weicher als die Konsistenz der frischen Früchte (Komponente (a)), so dass für den Verbraucher, beim Verzehr die Früchte von einem zart angelierten Medium umgeben sind.

Das erfindungsgemäße Lebensmittelprodukt kann aber selbstverständlich mehr als nur eine erste oder eine zweite Schicht umfassen. In manchen Fällen ist es durchaus wünschenswert, eine dritte oder weitere Schichten vorzusehen, wobei die dritte oder eine der weiteren Schichten in ihrem Aufbau der ersten oder zweiten Schicht entsprechen kann. Auch eine mehrfache Wiederholung von Schichten ist in manchen Fällen erwünscht.

Sofern in einem erfindungsgemäßen mehrschichtigen Lebensmittelprodukt, welches eine Komponente (c) umfasst, Pektin als Verdickungsmittel neben dem einen oder mehren Galactomannanen eingesetzt wird, vermag dieses mit den aus dem Milchprodukt und/oder Sojaprodukt in die wässrige Zubereitung hineindiffundierenden zweiwertigen Kationen (Calcium, Magnesium) im Sinne einer Vernetzung zu reagieren, wodurch eine leichte Kontraktion innerhalb der wässrigen Zubereitung hervorgerufen wird. Bevorzugt ist insoweit der Einsatz von Milchprodukten, da diese im Vergleich zu Sojaprodukten einen höheren Anteil an zweiwertigen Calcium- und Magnesiumkationen besitzen. Diese Kontraktion wird durch die Wasseranlagerung an das oder die Galactomannane (insbesondere Guarkernmehl) und die damit einhergehende Quellung und Expansion des bzw. der Galactomannane kompensiert, so dass im Ergebnis auf Grund einer Ausbalancierung der vorgenannten Wirkungen eine zart-angelierte, cremige Konsistenz vorliegt. Beim Verzehr eines erfindungsgemäßen Lebensmittelproduktes kommt es in der Mundhöhle des Konsumenten zu einem Temperaturanstieg innerhalb des Lebensmittelproduktes und aus diesem Grunde zu einer Viskositätsverminderung, was vom Konsumenten als angenehmes "Schmelzen im Mund" empfunden wird.

Die vorliegende Erfindung betrifft gemäß einem weiteren, verwandten Aspekt auch die Verwendung einer wässrigen, fließfähigen Zubereitung wie vorstehend als Komponente (b) definiert, als Bindemittel zum Binden frischer, ganzer Früchte und/oder frischer Fruchtstücke, insbesondere in einem mehrschichtigen Lebensmittelprodukt (wobei mehrschichtig zumindest zweischichtig bedeutet) wie oben beschrieben. Hinsichtlich der bevorzugten Ausgestaltungen der wässrigen, fließfähigen Zubereitung gilt dabei das weiter oben zur Komponente (b) gesagte entsprechend.

Bislang wurde vornehmlich ein erfindungsgemäßes Lebensmittelprodukt beschrieben, wie es direkt nach seiner Herstellung vorliegt. Es wurde aber bereits darauf hingewiesen, dass bei Lagerung eines erfindungsgemäßen Lebensmittelproduktes bestimmte Prozesse ablaufen, die einem Verlust an Attraktivität des Lebensmittelproduktes entgegenwirken.

Die vorliegende Erfindung betrifft dementsprechend auch ein verzehrfertiges Lebensmittelprodukt, dass durch Lagern eines erfindungsgemäßen, frisch hergestellten Lebensmittelproduktes erhältlich ist. Die Lagerung erfolgt dabei vorzugsweise bei einer Temperatur im Bereich von 3 bis 10°C, vorzugsweise 6 bis 8°C.

Die vorliegende Erfindung betrifft auch ein Verfahren zur Herstellung eines erfindungsgemäßen (frischen) Lebensmittelproduktes, wie es vorstehend beschrieben ist. Das erfindungsgemäße Verfahren umfasst dabei die folgenden Schritte:
- Bereitstellen einer oder mehrerer Lagen frischer, ganzer Früchte und/oder frischer Fruchtstücke, wie als Komponente (a) des erfindungsgemäßen Lebensmittelproduktes definiert,
- Applizieren einer fließfähigen, wässrigen Zubereitung, wie als Komponente (b) des erfindungsgemäßen Lebensmittelproduktes definiert, auf die Lage bzw. Lagen frischer, ganzer Früchte und/oder frischer Fruchtstücke, so dass Zwischenräume zwischen den frischen, ganzen Früchten und/oder den frischen Fruchtstücken ganz oder teilweise ausgefüllt werden und sich eine erste Schicht aus den Komponenten (a) und (b) bildet.

Alternativ kann auch die wässrige Zubereitung vorgelegt werden oder gleichzeitig mit frischen Früchten in ein Behältnis gegeben werden.

Sofern ein erfindungsgemäßes mehrschichtiges Lebensmittelprodukt hergestellt werden soll, wird in einem erfindungsgemäßen Verfahren vorzugsweise eine Schicht aus einem Milchprodukt und/oder Sojaprodukt als Komponente (c) des erfindungsgemäßen Lebensmittelproduktes über und/oder unter (vorzugsweise aber nur über) der aus den Komponenten (a) und (b) gebildeten ersten Schicht angeordnet.

Bei Herstellung eines bevorzugten erfindungsgemäßen Lebensmittelproduktes wird die einzusetzende wässrige Zubereitung häufig so auf eine Lage frischer Früchte appliziert, dass sich der Flüssigkeitsspiegel der wässrigen Zubereitung zum Zeitpunkt der Herstellung des erfindungsgemäßen Lebensmittelproduktes und unterhalb der Füllhöhe H_{F} der Früchte befindet. Die wässrige Zubereitung umgibt somit die Früchte nicht ganz vollständig, füllt aber im wesentlichen bereitsdie Zwischenräume zwischen diesen aus. Frische Früchte und wässrige Zubereitung bilden gemeinsam eine erste Schicht, deren Oberfläche auf Grund der aus der wässrigen Zubereitung herausragenden frischen Früchte uneben ist. Auf diese erste Schicht wird ein Milchprodukt oder Sojaprodukt appliziert, so dass dieses von oben in die erste Schicht eingreift und ebenfalls die Früchte teilweise umschließt. Die wässrige Zubereitung bindet dann den mit der Zeit aus den Früchten entweichenden Fruchtsaft sowie das auf Grund von Diffusionsvorgängen aus dem Milchprodukt oder Sojaprodukt in die erste Schicht eintretende Wasser; hierbei gewinnt die wässrige Zubereitung an Volumen, wobei der Flüssigkeitsspiegel H_{S} der wässrigen Zubereitung ansteigt. Gleichzeitig sinkt die Füllhöhe H_{F} der Früchte auf Grund des Wasserverlustes etwas ab.

Erfindungsgemäße Lebensmittelprodukte umfassen üblicherweise in der Komponente (b), d.h. der wässrigen Zubereitung neben den Komponenten (i) und (ii) sowie gegebenenfalls (iii) und/oder (iv) und/oder (v) weitere Bestandteile. Bevorzugt einzusetzende weiter Bestandteile sind: Aromen, Farbstoffe, Stabilisatoren und/oder Fruchtbestandteile. Als Fruchtbestandteile können unter anderem Fruchtextrakte, Püree, Fruchtsaft, Fruchtsaftkonzentrate und/oder geraspelte Früchte eingesetzt werden. Durch die genannten (weiteren) Bestandteile wird eine Anpassung bzw. Beeinflussung insbesondere des Geschmacks erreicht und beispielsweise einer Farbveränderung der frischen Früchte entgegengewirkt.

Ein erfindungsgemäßes Lebensmittelprodukt, welches die Komponenten (a), (b) sowie (c) umfasst, wobei als Komponente (c) ein Milchprodukt gewählt ist, besitzt besonders bevorzugt die folgende Zusammensetzung:
- 15 Gew-% bis 20 Gew-% frische, ganze Früchte und/oder frische Fruchtstücke (Komponente (a)),
- 5 Gew-% bis 15 Gew-% wässrige Zubereitung (Komponente (b)), vorzugsweise 8 Gew.% bis 12 Gew.%, besonders bevorzugt 10 Gew.-%,
- 70 Gew.% bis 75 Gew.-% Milchprodukt (Komponente (c)).
   Ein erfindungsgemäßes Verfahren zur Herstellung eines Lebensmittelproduktes wird vorzugsweise industriell, vorzugsweise unter Verwendung flüssigkeitsdichter Behältnisse durchgeführt, welche jeweils eine Verzehrportion des Lebensmittelproduktes umfassen sollen. Das Bereitstellen der einen oder mehreren Lagen frischer, ganzer Früchte und/oder frischer Fruchtstücke (Komponente (a)) erfolgt dann direkt in dem vorgesehenen Behältnis. Das Applizieren der fließfähigen, wässrigen Zubereitung (Komponente (b)) erfolgt durch Zugabe in das Behältnis und auf die frischen Früchte, so dass Zwischenräume zwischen den frischen, ganzen Früchten bzw. frischen Fruchtstücken zumindest teilweise mit der wässrigen Zubereitung (Komponente (b)) ausgefüllt werden. Gegebenenfalls wird auf die resultierende (erste) Schicht der Komponenten (a) und (b) dann die Komponente (c) gegeben, d.h. ein Milchprodukt und/oder Sojaprodukt (vorzugsweise ein Milchprodukt). Anschließend wird das resultierende Lebensmittelprodukt bei einer Temperatur oberhalb des Gefrierpunkts, aber vorzugsweise unter 10°C gelagert, so dass während der Lagerung die frischen Früchte (Komponente (a)) Saft an die wässrige Zubereitung abgeben. Das Wasser im Fruchtsaft erhöht die Wasseraktivität in der wässrigen Zubereitung und wird von den darin vorhandenen Galactomannanen (insbesondere Guarkernmehl) aufgenommen, woraus eine Zunahme der Viskosität der wässrigen Zubereitung resultiert. Dieser Effekt wird bei Verwendung von Zucker in Komponente (i) der wässrigen Zubereitung noch unterstützt, denn der Zuckergehalt in der wässrigen Zubereitung nimmt auf Grund des Zuckerübertritts in die frischen Früchte ab, so dass die Wasseraktivität in der wässrigen Zubereitung auch deshalb steigt und das Wasserbindungsvermögen der Galactomannane entsprechend zunimmt.
   Selbstverständlich kann auch in dem vorstehend skizzierten industriellen Verfahren zuerst die wässrige Zubereitung (Komponente (b)) in das bereitgestellte Verhältnis gegeben werden und erst in einem zweiten Schritt die Zugabe der frischen Früchte erfolgen.
   Vorteilhafter Weise liegen die frischen Früchte zum Zeitpunkt ihrer Zugabe in das Behältnis im gefrorenen Zustand vor. In diesem Zustand sind sie unempfindlich gegen mechanische Beanspruchungen, wie beispielsweise Quetschungen. Zudem hat die Verwendung tiefgefrorener frischer Früchte hygienische Vorteile, da diese bei der Handhabung keinen Fruchtsaft verlieren.
   Durch die Verwendung von Tiefkühl-Früchten oder Tiefkühl-Fruchtstücken wird ein erfindungsgemäßes Lebensmittelprodukt bereits bei der Herstellung haltbarer gemacht. Durch den Gefrierprozess wird nämlich die Keimzahl in den Früchten deutlich reduziert. Allerdings bilden sich bei dem Gefrierprozess Eiskristalle in den Früchten, welche durch ihre Scharfkantigkeit die Zellmembranen und Vakuolen durchstoßen können. Die zerstörte Gewebestruktur der frischen, gefrorene Früchte ist nach dem Auftauen der Früchte dann nicht mehr in der Lage, den Fruchtsaft ausreichend zurückzuhalten, und es kommt zu dem vorstehend bereits mehrfach beschriebenen Austritt von Fruchtsaft aus den frischen Früchten. Aus diesem Grund ist es besonders vorteilhaft, die frischen Früchte durch einen spezifischen Verlauf der Temperatur-Zeit-Kurve für die Lagerung haltbar zu machen. Vorteilhaft werden die Früchte dabei zunächst auf eine Temperatur von zumindest - 20 °C gebracht, wobei die Früchte zunächst sehr rasch gefroren werden und dann bei dieser Temperatur gelagert. Ein schneller Einfriervorgang wirkt der Bildung großer Kristalle entgegen. Weiterhin wird der Eiskristallbildung vorzugsweise durch die Vermeidung einer Schwankung der Lagertemperatur entgegengewirkt, wodurch die frischen Früchte geschont werden und das Endprodukt optisch attraktiver wirkt.
   Selbstverständlich werden die industriell eingesetzten flüssigkeitsdichten Behältnisse nach Einfüllen des Lebensmittelproduktes (Komponenten (a), (b) sowie gegebenenfalls (c)) durch ein Verschlussmittel (z.B., einen handelsüblichen Deckel) für die Lagerung verschlossen.
   Weitere Aspekte der vorliegenden Erfindung ergeben sich aus den beigefügten Patenansprüchen sowie dem nachfolgenden Ausführungsbeispiel.

### Ausführungsbeispiel

Die Erfindung wird nachfolgend anhand eines Ausführungsbeispiels unter Bezugnahme auf die beigefügte Zeichnung dargestellt.

Die einzige Zeichnungsfigur zeigt einen 400 ml-Becher 1, gefüllt mit frischen Früchten (Erdbeeren) 3 und einem Milchprodukt 2, im Querschnitt. Der Becher 1 hat eine Höhe H_{B} von 105 mm und weist am Boden einen Durchmesser von 90 mm und am Kopf einen Durchmesser von 110 mm auf. Er besteht aus einem durchsichtigen Kunststoff, so dass man den Inhalt, das Lebensmittelprodukt 0, deutlich erkennen kann. Der Inhalt wird durch eine Versiegelung aus einer Kunststofffolie abgedeckt, die bei erstmaligem Öffnen abgetrennt werden muss und darüber ist ein abnehmbarer Deckel 5 angeordnet. Weiterhin ist der Becher 1 mit einem Henkel ausgestattet, so dass er optisch einem "Eimerchen" gleicht.

Am Boden des Bechers 1 sind 80 g entkelchte Tiefkühl-Erdbeeren (Früchte 3) mit einem durchschnittlichen Durchmesser von 20 mm angeordnet. Im unteren Bereich der Erdbeeren füllen 40 g einer wässrigen Zubereitung 4 die Zwischenräume zwischen den Früchten, und im oberen Bereich der Erdbeeren beziehungsweise über den Erdbeeren sind 280 g Joghurt (Milchprodukt 2) angeordnet.

Das entspricht einer Zusammensetzung des Lebensmittels 0 von 20 % Früchten, - 10 % wässrige Zubereitung 4 und 70 % Milchprodukt.

Der Gefriervorgang der entkelchten Erdbeeren erfolgt bei minus 20 bis minus 40°C, die anschließende Lagerung und der Transport bei minus 20°C. Nach dem Auspacken der Erdbeeren und bei der Dosage in den Becher 1 beträgt die Temperatur der Erdbeeren minus 15 bis minus 20°C, und sie weisen eine Gesamtkeimzahl von maximal 1000 Keime pro Gramm, vorzugsweise maximal 500 Keime pro Gramm auf.

Die über die Erdbeeren gegebene wässrige Zubereitung 4 ist wie folgt zusammengesetzt:

(Bei den Prozent-Angaben handelt es sich um Gewichts-Prozent, bezogen auf den Gesamtmenge der wässrigen Zubereitung)
- ca. 50,00 % Zucker
- ca. 41,25 % Wasser
- ca. 7,60. % Glukose-Fruktose-Sirup
- ca. 0,95 % Verdickungsmittel aus
   - Pektin E 440 (0,5 %)
   - Guarkemmehl E 412 (0,4 %)
   - Xanthan E 415 (0,05 %)
- ca. 0,20 % Natriumcitrat E 331 als Säureregulator.

Das Milchprodukt besteht aus einem gesüßten Joghurt (8 Gew.-% Kristallzucker, 3,8 Gew.-% Fett, bezogen auf die Gesamtmenge des Joghurts). Das Endprodukt, also das Lebensmittel 0, weist einen Zuckergehalt von ca. 11,0 Gew.-% auf, bezogen auf die Gesamtmenge des Lebensmittels.

Das so zusammengesetzte Lebensmittel 0 weist bei einer Lagerung bei + 6°C eine Mindesthaitbarkeitsdauer von ca. 10 Tagen auf. Nach bereits 24 Stunden Lagerung erreicht das Produkt seine optimale Konsistenz, weil der Fruchtsaft der aufgetauten Früchte zu diesem Zeitpunkt vollständig durch die wässrige Zubereitung 4 zu einem zarten Gel gebunden ist. Gleichzeitig ist eine ansprechende Optik erzeugt. Der Flüssigkeitsspiegel der wässrigen Zubereitung Hₛ ist angestiegen und die Höhe der Fruchtlage H_{F} ist ein wenig gesunken, so dass die gesamten Früchte von der wässrigen Zubereitung 4 umgeben sind. Die wässrige Zubereitung 4 fixiert die Früchte sowohl untereinander als auch relativ zu dem Boden und den Wandungen des Bechers 1 und verhindert eine Flotation in den Joghurt. Das Fruchtbett ist durch den durchsichtigen Becher 1 gut sichtbar.

Beim Verzehr des Lebensmittels 0 tritt zu diesem Zeitpunkt dessen cremig schmelzende Konsistenz als sehr angenehm in Erscheinung, so dass aus Sicht des Konsumenten im Vergleich zu herkömmlichen Produkten von einer Geschmackssensation gesprochen werden kann. Dieser Zustand kann bei einer Lagerung bei +6°C mindestens 10 Tage aufrecht erhalten werden.

### Bezugszeichenliste:

- 0: Lebensmittel
- 1: Becher
- 2: Milchprodukt
- 3: frische Früchte
- 4: wässrige Zubereitung
- 5: Deckel

- H_{B}: Höhe des Bechers
- H_{S}: Flüssigkeitsspiegel der wässrigen Zubereitung
- H_{F}: Höhe der Fruchtschicht

## Patentansprüche

1. Lebensmittelprodukt, umfassend die Komponenten
(a) frische, ganze Früchte und/oder frische Fruchtstücke sowie
(b) eine wässrige, fließfähige Zubereitung, welche Zwischenräume zwischen den frischen, ganzen Früchten und/oder den frischen Fruchtstücken ganz oder teilweise ausfüllt, umfassend:
(i) in einer Gesamtmenge von mehr als 25 Gew.-%, bezogen auf die Gesamtmenge der wässrigen Zubereitung, gelöste Feststoffe ausgewählt aus der Gruppe bestehend aus: Zuckerarten, Zuckeralkohole, Süßstoffe, Fructooligosaccharide, Polydextrose, sonstige. Ballaststoffe und deren Mischungen,
(ii) ein oder mehrere Galactomannane zum Verdicken der Zubereitung unter Lagerbedingungen durch Binden von Wasser aus den Früchten und/oder Fruchtstücken.

2. Lebensmittelprodukt nach Anspruch 1, umfassend eine Gesamtmenge von mehr als 40 Gew.-%, vorzugsweise mehr als 45 Gew-%, der besagten gelösten Feststoffe, bezogen auf die Gesamtmenge der wässrigen Zubereitung (b).

3. Lebensmittelprodukt nach einem der vorangehenden Ansprüche, wobei die gelösten Feststoffe in der wässrigen Zubereitung (b) ausgewählt sind aus der Gruppe bestehend aus: Zuckerarten, Zuckeralkohole und deren Mischungen.

4. Lebensmittelprodukt nach einem der vorangehenden Ansprüche, wobei das Galactomannan bzw. eines der Galactomannane Guarkernmehl ist.

5. Lebensmittelprodukt nach einem der vorangehenden Ansprüche, umfassend ein oder mehrere Galactomannane in einer Menge im Bereich von 0,2 bis 0,8 Gew.-%, bezogen auf die Gesamtmenge der wässrigen Zubereitung (b), vorzugsweise Guarkernmehl in einer Menge im Bereich von 0,2 bis 0,8 Gew.-%.

6. Lebensmittelprodukt nach einem der vorangehenden Ansprüche, in der wässrigen Zubereitung (b) weiter umfassend
(iii) ein niedrigverestertes, vorzugsweise amidiertes Pektin.

7. Lebensmittelprodukt nach Anspruch 6, in der wässrigen Zubereitung (b) umfassend niedrigverestertes, vorzugsweise amidiertes Pektin in einer Menge von 0,5 bis 1,0 Gew.-%, vorzugsweise 0,5 bis 0,75 Gew.-%, bezogen auf die Gesamtmenge der wässrigen Zubereitung (b).

8. Lebensmittelprodukt nach einem der vorangehenden Ansprüche, in der wässrigen Zubereitung (b) weiter umfassend
(iv) einen oder mehrere Säureregulatoren,
wobei die wässrige Zubereitung einen pH-Wert im Bereich von 4 bis 5 besitzt.

9. Lebensmittelprodukt nach einem der vorangehenden Ansprüche, wobei die frischen, ganzen Früchte und/oder die frischen Fruchtstücke im gefrorenen Zustand vorliegen.

10. Lebensmittelprodukt nach einem der vorangehenden Ansprüche, in der wässrigen Zubereitung (b) weiter umfassend
(v) ein Konservierungsmittel, vorzugsweise ausgewählt aus der Gruppe bestehend aus Benzoesäure, Sorbinsäure, deren Salzen und Mischungen davon.

11. Lebensmittelprodukt nach einem der vorangehenden Ansprüche, umfassend
(a) frische, ganze Früchte und/oder frische Fruchtstücke, wobei die frischen, ganzen Früchte und/oder die frischen Fruchtstücke im gefrorenen Zustand vorliegen,
sowie
(b) eine wässrige, fließfähige Zubereitung mit einem pH-Wert im Bereich von 4 bis 5, welche Zwischenräume zwischen den frischen, ganzen Früchten und/oder den frischen Fruchtstücken ganz oder teilweise ausfüllt, umfassend:
(i) in einer Gesamtmenge von mehr als 40 Gew.-%, vorzugsweise mehr als 45 Gew-%, bezogen auf die Gesamtmenge der wässrigen Zubereitung, gelöste Feststoffe ausgewählt aus der Gruppe bestehend aus: Zuckerarten, Zuckeralkohole, Süßstoffe, Fructooligosaccharide, Polydextrose, Ballaststoffe und deren Mischungen,
(ii) in einer Gesamtmenge im Bereich von 0,2 bis 0,8 Gew.-%, bezogen auf die Gesamtmenge der wässrigen Zubereitung, ein oder mehrere Galactomannane zum Verdicken der Zubereitung unter Lagerbedingungen durch Binden von Wasser aus den Früchten und/oder Fruchtstücken, wobei das Galactomannan bzw. eines der Galactomannane Guarkernmehl ist,
(iii) ein niedrigverestertes, vorzugsweise amidiertes Pektin in einer Menge von 0,5 bis 1,0 Gew.-%, vorzugsweise 0,5 bis 0,75 Gew.%, bezogen auf die Gesamtmenge der wässrigen Zubereitung, (iv) ein oder mehrere Säureregulatoren,
(v) ein Konservierungsmittel, vorzugsweise ausgewählt aus der Gruppe bestehend aus Benzoesäure, Sorbinsäure, deren Salzen und Mischungen davon.

12. Lebensmittelprodukt nach einem der vorangehenden Ansprüche, weiter umfassend:
(c) ein Milchprodukt und/oder ein Sojaprodukt
wobei das Lebensmittelprodukt mehrschichtig ist und
die Komponenten (a) und (b) gemeinsam eine erste Schicht und
die Komponente (c) eine zweite Schicht
bilden, wobei erste und zweite Schicht aneinandergrenzen und gegebenenfalls ineinandergreifen.

13. Lebensmittelprodukt nach Anspruch 12, wobei die erste Schicht unter der zweiten Schicht angeordnet ist und die Füllhöhe H_{F} der Komponente (a) in der ersten Schicht höher ist als die Füllhöhe H_{S} der Komponente (b) in der ersten Schicht.

14. Verwendung einer wässrigen, fließfähigen Zubereitung wie in einem der vorangehenden Ansprüche als Komponente (b) definiert, als Bindemittel zum Binden frischer, ganzer Früchte und/oder frischer Fruchtstücke, insbesondere zur Herstellung eines mehrschichtigen Lebensmittelprodukts nach Anspruch 12 oder 13.

15. Verzehrfertiges Lebensmittelprodukt, erhältlich durch Lagern eines Lebensmittelproduktes nach einem der vorangehenden Ansprüche 1 bis 13, vorzugsweise bei einer Temperatur im Bereich von 3 bis 10 °C, vorzugsweise 6 bis 8°C.

16. Verfahren zur Herstellung eines Lebensmittelproduktes nach einem der Ansprüche 1 bis 13, mit folgenden Schritten:
- Bereitstellen einer oder mehrerer Lagen frischer, ganzer Früchte und/oder frischer Fruchtstücke, wie als Komponente (a) des Lebensmittelproduktes nach einem der Ansprüche 1 bis 13 definiert,
- Applizieren einer fließfähigen, wässrigen Zubereitung, wie als Komponente (b) des Lebensmittelproduktes nach einem der Ansprüche 1 bis 13 definiert, auf die Lage bzw. Lagen frischer, ganzer Früchte und/oder frischer Fruchtstücke,
so dass Zwischenräume zwischen den frischen, ganzen Früchten und/oder den frischen Fruchtstücken ganz oder teilweise ausgefüllt werden und sich eine erste Schicht aus den Komponenten (a) und (b) bildet,
- gegebenenfalls Anordnen einer Schicht aus einem Milchprodukt und/oder Sojaprodukt als Komponente (c) des Lebensmittelproduktes nach einem der Ansprüche 1 bis 13, über und/oder unter, vorzugsweise nur über der aus den Komponenten (a) und (b) gebildeten ersten Schicht.

## Claims

1. A food product comprising the following components
(a) fresh whole fruits and/or pieces of fresh fruit, and
(b) an aqueous, free-flowing preparation which completely or in part fills gaps between the fresh whole fruits and/or pieces of fresh fruit and comprises:
(i) in a total amount of more than 25 % by weight based on the total amount of the aqueous preparation, dissolved solids selected from the group consisting of: sugars, sugar alcohols, sweeteners, fructooligosaccharides, polydextroses, other dietary fibres and mixtures thereof,
(ii) one or more galactomannans for thickening the preparation under storage conditions by binding water from the fruits and/or fruit pieces.

2. The food product according to claim 1, comprising a total amount of more than 40 % by weight, preferably more than 45 % by weight of said dissolved solids based on the total amount of the aqueous preparation (b).

3. The food product according to either of the preceding claims, wherein the dissolved solids in the aqueous preparation (b) are selected from the group consisting of: sugars, sugar alcohols and mixtures thereof.

4. The food product according to any one of the preceding claims, wherein the galactomannan or one of the galactomannans is guar gum.

5. The food product according to any one of the preceding claims, comprising one or more galactomannans in an amount in the range of 0.2 to 0.8 % by weight based on the total amount of the aqueous preparation (b), preferably guar gum in an amount in the range of 0.2 to 0.8 % by weight.

6. The food product according to any one of the preceding claims in the aqueous preparation (b) further comprising
(iii)a low-esterified, preferably amidated pectin.

7. The food product according to claim 6 in the aqueous preparation (b) comprising low-esterified, preferably amidated pectin in an amount of 0.5 to 1.0 % by weight, preferably 0.5 to 0.75 % by weight based on the total amount of the aqueous preparation (b).

8. The food product according to any one of the preceding claims in the aqueous preparation (b) further comprising
(iv) one or more acid regulators,
wherein the aqueous preparation has a pH in the range of 4 to 5.

9. The food product according to any one of the preceding claims, wherein the fresh whole fruits and/or pieces of fresh fruit are provided in the frozen state.

10. The food product according to any one of the preceding claims in the aqueous preparation (b) further comprising
(v) a preservative, preferably selected from the group consisting of benzoic acid, sorbic acid, and salts and mixtures thereof.

11. The food product according to any one of the preceding claims, comprising
(a) fresh whole fruits and/or pieces of fresh fruit, wherein the fresh whole fruits and/or pieces of fresh fruit are provided in the frozen state,
and
(b) an aqueous, free-flowing preparation with a pH in the range of 4 to 5 which completely or in part fills gaps between the fresh whole fruits and/or pieces of fresh fruit and comprises:
(i) in a total amount of more than 40 % by weight, preferably more than 45 % by weight based on the total amount of the aqueous preparation, dissolved solids selected from the group consisting of: sugars, sugar alcohols, sweeteners, fructooligosaccharides, polydextroses, dietary fibres and mixtures thereof,
(ii) in a total amount in the range of 0.2 to 0.8 % by weight based on the total amount of the aqueous preparation, one or more galactomannans for thickening the preparation under storage conditions by binding water from the fruits and/or fruit pieces, the galactomannan or one of the galactomannans being guar gum,
(iii)a low-esterified, preferably amidated pectin in an amount of 0.5 to 1.0 % by weight, preferably 0.5 to 0.75 % by weight based on the total amount of the aqueous preparation,
(iv) one or more acid regulators,
(v) a preservative, preferably selected from the group consisting of benzoic acid, sorbic acid, and salts and mixtures thereof.

12. The food product according to any one of the preceding claims, further comprising:
(c) a milk product and/or a soya product
wherein the food product is multi-layered and
the components (a) and (b) together form a first layer and
the component (c) forms a second layer,
the first and second layers touching one another and optionally penetrating one another.

13. The food product according to claim 12, wherein the first layer is arranged beneath the second layer and the filling height H_{F} of component (a) in the first layer is greater than the filling height H_{S} of component (b) in the first layer.

14. A use of an aqueous, free-flowing preparation as defined as component (b) in any one of the preceding claims as a binder for binding fresh whole fruits and/or pieces of fresh fruit, in particular for producing a multi-layered food product according to either claim 12 or claim 13.

15. A ready-to-eat food product which is obtainable by storing a food product according to any one of preceding claims 1 to 13, preferably at a temperature in the range of 3 to 10 °C, preferably 6 to 8 °C.

16. A method for producing a food product according to any one of claims 1 to 13, comprising the following steps:
- providing one or more layers of fresh whole fruits and/or pieces of fresh fruit, such as component (a) of the food product defined according to any one of claims 1 to 13,
- applying a free-flowing, aqueous preparation, such as component (b) of the food product defined according to any one of claims 1 to 13, to the layer or layers of fresh whole fruit and/or pieces of fresh fruit,
in such a way that gaps between the fresh whole fruits and/or pieces of fresh fruit are filled completely or in part and a first layer of components (a) and (b) is formed,
- optionally arranging a layer of a milk product and/or soya product as component (c) of the food product according to any one of claims 1 to 13 above and/or beneath, preferably only above, the first layer formed of components (a) and (b).

## Revendications

1. Produit alimentaire, comprenant les composants
(a) des fruits frais entiers ou des morceaux de fruits frais, ainsi
(b) qu'une préparation aqueuse coulante, remplissant totalement ou partiellement des espaces entre les fruits frais entiers et/ou les morceaux de fruits frais, comprenant :
(i) dans une quantité totale de plus de 25 % en poids rapportée à la quantité totale de la préparation aqueuse, des matières solides dissoutes, choisies dans le groupe composé : des sucres, des alcools de sucre, des édulcorants, des fructo-oligosaccharides, du polydextrose, d'autres fibres et de leurs mélanges,
(ii) un ou plusieurs galactomannanes, pour épaissir la préparation sous des conditions de stockage, par liaison de l'eau issue des fruits et/ou des morceaux de fruits.

2. Produit alimentaire selon la revendication 1, comprenant une quantité totale supérieure à 40 % en poids, de préférence supérieure à 45 % en poids des matières solides dissoutes citées, en rapport à la quantité totale de la préparation aqueuse (b).

3. Produit alimentaire selon l'une quelconque des revendications précédentes, les matières solides dissoutes dans la préparation aqueuse (b) étant choisies dans le groupe composé : des sucres, des alcools de sucre et de leurs mélanges.

4. Produit alimentaire selon l'une quelconque des revendications précédentes, le galactomannane ou l'un des galactomannanes étant de la farine de graines de guar.

5. Produit alimentaire selon l'une quelconque des revendications précédentes, comprenant un ou plusieurs galactomannanes dans une quantité de l'ordre de 0,2 à 0,8 % en poids en rapport à la quantité totale de la préparation aqueuse (b), de préférence de la farine de graines de guar, dans une quantité de l'ordre de 0,2 à 0,8 % en poids.

6. Produit alimentaire selon l'une quelconque des revendications précédentes, comprenant en outre dans la préparation aqueuse (b)
(iii) une pectine faiblement estérifiée, de préférence de la pectine amidifiée.

7. Produit alimentaire selon la revendication 6, comprenant dans la préparation aqueuse (b) de la pectine faiblement estérifiée, de préférence amidifiée, dans une quantité de 0,5 à 1,0 % en poids, de préférence de 0,5 à 0,75 % en poids en rapport à la quantité totale de la préparation aqueuse (b).

8. Produit alimentaire selon l'une quelconque des revendications précédentes, comprenant en outre dans la préparation aqueuse (b)
(iv) un ou plusieurs régulateurs d'acidité,
la préparation aqueuse présentant une valeur pH de l'ordre de 4 à 5.

9. Produit alimentaire selon l'une quelconque des revendications précédentes, les fruits frais entiers et/ou les morceaux de fruits frais se présentant à l'état congelé.

10. Produit alimentaire selon l'une quelconque des revendications précédentes, comprenant en outre dans la préparation aqueuse (b)
(v) un conservateur, choisi de préférence dans le groupe composé de l'acide benzoïque, de l'acide sorbique, de leurs sels et de mélanges de ces derniers.

11. Produit alimentaire selon l'une quelconque des revendications précédentes, comprenant
(a) des fruits frais entiers et/ou des morceaux de fruits frais, les fruits frais entiers ou les morceaux de fruits frais se présentant à l'état congelé,
ainsi
(b) qu'une préparation aqueuse coulante, avec une valeur pH de l'ordre de 4 à 5, remplissant totalement ou partiellement des espaces entre les fruits frais entiers et/ou les morceaux de fruits frais, comprenant :
(i) dans une quantité totale de plus de 40 % en poids rapportée à la quantité totale de la préparation aqueuse, des matières solides dissoutes, choisies dans le groupe composé : des sucres, des alcools de sucre, des édulcorants, des fructo-oligosaccharides, du polydextrose, d'autres fibres et de leurs mélanges,
(ii) dans une quantité totale de l'ordre de 0,2 à 0,8 % en poids, en rapport à la quantité totale de la préparation aqueuse, un ou plusieurs galactomannanes, pour épaissir la préparation sous des conditions de stockage, par liaison de l'eau issue des fruits et/ou des morceaux de fruits, le galactomannane ou l'un des galactomannanes étant de la farine de graines de guar,
(iii) une pectine faiblement estérifiée, de préférence amidifiée, dans une quantité de 0,5 à 1,0 % en poids, de préférence de 0,5 à 0,75 % en poids, en rapport à la quantité totale de la préparation aqueuse,
(iv) un ou plusieurs régulateurs d'acidité,
(v) un conservateur, choisi de préférence dans le groupe composé de l'acide benzoïque, de l'acide sorbique, de leurs sels et de mélanges de ces derniers.

12. Produit alimentaire selon l'une quelconque des revendications précédentes, comprenant :
(c) un produit laitier et/ou un produit à base de soja
le produit alimentaire étant à plusieurs couches et
les composants (a) et (b) formant ensemble une première couche et le composant (c) une deuxième couche
la première et la deuxième couche étant adjacentes et le cas échéant pénétrant l'une dans l'autre.

13. Produit alimentaire selon la revendication 12, la première couche étant disposée sous la deuxième couche et la hauteur de remplissage H_{F} du composant (a) dans la première couche étant plus haute que la hauteur de remplissage H_{S} du composant (b) dans la première couche.

14. Utilisation d'une préparation aqueuse, coulante comme définie dans l'une quelconque des revendications précédentes en tant que composant (b) en tant qu'agent liant pour la liaison de fruits frais entiers et/ou de morceaux de fruits frais, notamment pour la fabrication d'un produit alimentaire à plusieurs couches selon la revendication 12 ou 13.

15. Produit alimentaire prêt à consommer, susceptible d'être obtenu par stockage d'un produit alimentaire selon l'une quelconque des revendications précédentes 1 à 13, de préférence à une température de l'ordre de 3 à 10 °C, de préférence de l'ordre de 6 à 8°C.

16. Procédé de production d'un produit alimentaire selon l'une quelconque des revendications 1 à 13 avec les étapes suivantes :
- mise à disposition d'une ou de plusieurs couches de fruits frais et/ou de morceaux de fruits frais, comme définie en tant que composant (a) du produit alimentaire selon l'une quelconque des revendications 1 à 13.
- application d'une préparation aqueuse coulante comme définie en tant que composant (b) du produit alimentaire selon l'une quelconque des revendications 1 à 13 sur la couche ou les couches de fruits frais entiers et/ou de morceaux de fruits frais,
de sorte à remplir totalement ou partiellement des espaces entre les fruits frais entiers et/ou les morceaux de fruits frais et à former une première couche des composants (a) et (b),
- le cas échéant disposition d'une couche d'un produit laitier et/ou d'un produit à base de soja en tant que composant (c) du produit alimentaire selon l'une quelconque des revendications 1 à 13, sur et/ou sous, de préférence seulement sur la première couche formée à partir des composants (a) et (b).
